# EUROPÄISCHE PATENTSCHRIFT

(11) **EP 0 519 530 B1**
(45) Veröffentlichungstag und Bekanntmachung des Hinweises auf die Patenterteilung: **25.01.1995**
(21) Anmeldenummer: 92201262.0
(22) Anmeldetag: 05.05.1992
(51) Int. Cl.: F03B 15/16, H02P 9/04

(54) **Verfahren zur Optimierung der Betriebsparameter einer doppelt regulierten Wasserturbine**
Procedure for optimizing the working parameters of a double controlled hydraulic turbine
Procédé d'optimisation des paramètres d'exploitation d'une turbine hydraulique à double réglage

(30) Priorität: 22.05.1991 CH 1516/91
(43) Veröffentlichungstag der Anmeldung: 23.12.1992
(73) Patentinhaber: Sulzer - Escher Wyss AG, CH-8023 Zürich (CH)
(72) Erfinder: Erlach, Josef, W-7980 Ravensburg 1 (DE)
(74) Vertreter: Hammer, Bruno, Dr.

(56) Entgegenhaltungen:
- FR-A- 1 099 349

## Beschreibung

Die Erfindung betrifft ein Verfahren zur Optimierung der Betriebsparameter einer Wasserturbine mit einem Leitapparat mit verstellbaren Leitschaufeln und einem mit einem elektrischen Generator gekoppelten Laufrad mit verstellbaren Laufschaufeln, wobei bei einer gegebenen Laufschaufelstellung des Laufrades die Stellung der Leitschaufeln des Leitapparates variiert wird

Von Wasserturbinen wird gefordert, aus einem Wasserstrom bestimmter, möglicherweise variabler Menge und unterschiedlicher Fallhöhe mittels eines Generators elektrische Energie mit optimalem Wirkungsgrad zu gewinnen. Dazu ist es erforderlich, die Betriebsparameter der Wasserturbine, insbesondere die Stellung der Leitschaufeln des Leitapparates bei einer bestimmten Stellung der Laufschaufeln des Laufrades auf die gegebenen Betriebsverhältnisse und aufeinander so abzustimmen, dass sich der grösstmögliche Wirkungsgrad der Energieumwandlung ergibt.

Bei doppelt regulierten Wasserturbinen, z.B. vom Kaplan- oder Rohrturbinen-Typ, bietet die Optimierung der Betriebsparameter in der Praxis jedoch einige Schwierigkeiten und erfordert einen erheblichen Aufwand.

Die Ermittlung der optimalen Betriebsparameter einer Wasserturbine ist z.B. in der FR-A-1 099 349 oder der entsprechenden DE-935 540 beschrieben. Hierbei wird die Leitschaufelstellung in Abhängigkeit von der Generatorleistung eingestellt. Die Bestimmung der optimalen Zuordnung des Leitapparates zu einer gegebenen Laufradstellung ist bei diesen vorbekannten Verfahren jedoch mit erheblichem Aufwand verbunden. Es werden dazu Feld-Versuche durchgeführt, bei welchen bei einer bestimmten Laufschaufelstellung verschiedene Leitschaufelstellungen mit schrittweiser Verstellung gefahren werden. Dies ergibt eine sogenannte Propellerkurve. Es werden so nacheinander mehrere Propellerkurven über den ganzen Leistungsbereich durchgefahren. Eine einhüllende Kurve wird anschliessend über die derart ermittelten Propellerkurven gelegt. Die berührenden Tangentenpunkte mit den Propellerkurven ergeben dabei die optimale Zuordnung von Leit- und Laufschaufelstellung.

Zur Bestimmung dieser Propellerkurven sind folgende Parameter erforderlich:
1. Die Turbinenleistung, ermittelt aus der Generatorleistung,
2. Die Fallhöhe aus der Differenz des Ober- und Unterwasserpegels, und
3. der Wasserstrom.

Dabei ist die Erfassung der Generatorleistung und der Fallhöhe ohne Schwierigkeit mit ausreichender Genauigkeit und Konstanz vorzunehmen, und diese stehen meist als permanentes Signal schon zur Verfügung. Die genaue Erfassung des Wasserstromes bereitet jedoch grosse Mühe und erheblichen Aufwand. Der Wasserstrom kann dabei auf verschiedene Arten erfasst werden, wie z.B. Flügelmessungen, Ultraschall, Strömungssonden etc.

Als klassische Art wird jedoch meist die Differenzdruckmessung nach der Winther-Kennedy-Methode angewandt. Es wird dabei nach dem Drallgesetz die unterschiedliche Geschwindigkeit in der Spirale ausgenützt. Die Messung an zwei Entnahmebohrungen in der Spirale, in unterschiedlicher radialer Entfernung von der Turbinenachse angebracht, ergibt einen vom Wasserstrom abhängigen Wirkdruck.

Gute brauchbare Messwerte zu erhalten, setzt dabei grosse Sorgfalt voraus. Für eine gute Entlüftung muss gesorgt sein, und eine Verschlammung der Messbohrungen etc. muss vermieden werden. Problematisch ist auch eine gut funktionierende und zuverlässige Differenzdruckmessung für eine betriebliche Dauermesseinrichtung. Bei vielen Anlagen, insbesondere solche älterer Bauart, sind zudem keine Differenzdruckmessanschlüsse in der Spirale vorgesehen.

Wenn infolge einer geänderten Wassermenge oder wegen erhöhten und verminderten Bedarfes an elektrischer Energie weitere Turbinen zugeschaltet oder abgeschaltet werden müssen, verschiebt sich das Optimum und es muss eine neue Messreihe zur Ermittlung der geänderten optimalen Betriebsparameter durchgeführt werden.

Es ist bereits ohne grossen Erfolg versucht worden, die vorstehend beschriebene Einstellung auf optimale Betriebsparameter zu automatisieren und somit die Messzeiten zu verkürzen. Weiter ist versucht worden, anstatt des Grossversuches Modellversuche durchzuführen. Diese zeigten jedoch nicht immer eine hinreichende Uebereinstimmung mit der Praxis.

Die Erfindung setzt sich die Aufgabe, die angegebenen Nachteile des Standes der Technik zu beseitigen und ein automatisches, schnelleres und weniger aufwendiges Verfahren zur Ermittlung der optimalen Betriebsparameter einer doppelt regulierten Wasserturbine zu schaffen, wobei vorzugsweise die gut und genau zu erfassenden Parameter herangezogen werden.

Erfindungsgemäss wird diese Aufgabe dadurch gelöst, dass die Intensität der zeitlichen Schwankungen eines beim Betrieb der Wasserturbine ermittelten Messwertes in einem vorgegebenen Frequenzbereich in Abhängigkeit von der Leitschaufelstellung bestimmt wird und die Leitschaufeln auf diejenige Stellung eingestellt werden, bei welcher die Intensitätsschwankungen des Messwertes ein Minimum annehmen.

Die Erfindung macht sich die Erkenntnis zunutze, dass eine falsche Zuordnung der Lauf- und Leitapparatestellung Ablösungen verursacht, die sich in stochastischen Druckschwankungen im Saugrohr auswirken.

Als Rückwirkung auf die Turbine treten verstärkte Lager- und Torsionsschwingungen auf, die als Messwert dienen können. Dieses spezifische Schwingungsverhalten ist wiederum als Abbild in der Leistungsschwankung des Generators zu finden. Daher können mit Vorteil auch die Intensitätsschwankungen der Generatorleistung als Messwert ausgewertet werden. Durch eine laufende Erfassung dieser Schwingungen und eine geeignete "on line"-Auswertung ist ein guter Rückschluss auf einen gut eingestellten Zusammenhang möglich.

Durch eine geeignete Steuerung kann der Lauf- bzw. Leitapparat nachgeführt werden, d.h. eine "Selbstoptimierung" erreicht werden.

Bei dem erfindungsgemässen Verfahren wird also nicht der statische Anteil, z.B. das Maximum des Messwertes, etwa der Generatorleistung direkt bestimmt, sondern es wird in bewusster Abweichung vom direkten Weg zur Optimierung der alternierende Anteil, d.h. die Schwankungs-Amplitude des Messwertes in einem bestimmten Frequenzbereich, z.B. die Leistungspendelung des Generators herangezogen, dessen Intensität von der mehr oder weniger idealen Anströmung der Laufschaufeln bzw. dem bei der Ausströmung entstehenden Vor- oder Nachdrall abhängt. Durch periodische und stochastische Druck-Schwankungen wird dabei eine Pendelung der Generatorleistung hervorgerufen. Es wird nun auf indirekte Weise der Umstand ausgenützt, dass bei idealer Anströmung nicht nur der Absolutwert der vom Generator abgegebenen Leistung ein Maximum aufweist, sondern dass gleichzeitig die Schwankungen oder die Pendelung der Generatorleistung ein Minimum wird. Dieses Minimum lässt sich auf einfache und schnelle Weise ohne genaue Messung des Absolutwertes der Leistung und der häufig schwierig genau zu messenden Druckdifferenz oder des Wasserdurchflusses ermitteln.

Als Mass für die Schwankungs-Intensität bzw. Amplitude wird mit Vorteil der Effektivwert der Leistungspendelung bzw. der Lagerschwingungen bestimmt und mittels eines geschlossenen Regelkreises die Leitapparatstellung auf das Minimum des Effektivwertes der Leistungsschwankungen mittels einer geeigneten Regeleinrichtung eingeregelt.

Vorzugsweise wird vor der Effektivwertbildung das Leistungssignal durch einen Hochpassfilter geschickt, um niederfrequente Leistungspendelungen, hervorgerufen durch Fallhöhenschwankungen, zu eliminieren.

Mit dem gleichen Effekt können statt des Leistungssignales auch Referenzschwingungen an der Turbine, wie z.B. die Lagerschwingungen als Auswertsignal verwendet werden.

Mit Vorteil werden die eingestellten Betriebsparameter der Wasserturbine bis zu einer neuen Betriebsoptimierung festgehalten. Eine solche Neuoptimierung, welche in der Regel weniger als eine Stunde in Anspruch nimmt, kann beispielsweise automatisch in regelmässigen Zeitabständen vorgenommen werden, oder aber automatisch bei einer vorgegebenen Aenderung der vom Generator abgegebenen Leistung. Desgleichen ist es vorteilhaft, eine Neuoptimierung bei jeder Aenderung der Betriebsverhältnisse vorzusehen, insbesondere auch bei der Zuschaltung oder Abschaltung der Nachbar-Turbinen des Kraftwerkes.

Besonders vorteilhaft ist es, eine Neuoptimierung der Betriebsparameter auszulösen, sobald die Intensität der Leistungsschwankung des Generators einen vorgegebenen Schwellenwert übersteigt. In der Regel wird dadurch eine Aenderung der Betriebsbedingungen angezeigt, welche ein Auswandern der Betriebsparameter vom Optimum signalisiert. Zudem kann dies zusätzlich zur Ueberwachung der Anlage genutzt werden, beispielsweise von Verstopfungen und Verschlammung, welche eine Spülung der Maschine notwendig machen.

## Patentansprüche

1. Verfahren zur Optimierung der Betriebsparameter einer Wasserturbine mit einem Leitapparat mit verstellbaren Leitschaufeln und einem mit einem elektrischen Generator gekoppelten Laufrad mit verstellbaren Laufschaufeln, wobei bei einer gegebenen Laufschaufelstellung des Laufrades die Stellung der Leitschaufeln des Leitapparates variiert wird, dadurch gekennzeichnet, dass die Intensität der zeitlichen Schwankungen eines beim Betrieb der Wasserturbine ermittelten Messwertes in einem vorgegebenen Frequenzbereich in Abhängigkeit von der Leitschaufelstellung bestimmt wird und die Leitschaufeln auf diejenige Stellung eingestellt werden, bei welcher die Intensitätsschwankungen des Messwertes ein Minimum annehmen.

2. Verfahren nach Anspruch 1, dadurch gekennzeichnet, dass als Messwert die Generatorleistung benutzt wird.

3. Verfahren nach Anspruch 1, dadurch gekennzeichnet, dass als Messwert die Lagerschwingungen der Wasserturbine benutzt werden.

4. Verfahren nach einem der Ansprüch 1 - 3, dadurch gekennzeichnet, dass der Frequenzbereich durch ein Hochpassfilter nach unten begrenzt ist.

5. Verfahren nach einem der Ansprüche 1 - 4, dadurch gekennzeichnet, dass die Intensität der Schwankungen des Messwertes durch Effektivwertbildung bestimmt wird.

6. Verfahren nach einem der Ansprüche 1 - 5, dadurch gekennzeichnet, dass die Optimierung in vorgegebenen Zeitabständen wiederholt wird.

7. Verfahren nach einem der Ansprüche 1 - 6, dadurch gekennzeichnet, dass die Optimierung bei einer vorgegebenen Aenderung des Messwertes wiederholt wird.

8. Verfahren nach einem der Ansprüche 1 - 6, dadurch gekennzeichnet, dass die Optimierung bei einer vorgegebenen Aenderung der Betriebsverhältnisse wiederholt wird.

9. Verfahren nach einem der Ansprüche 1 - 6, dadurch gekennzeichnet, dass die Optimierung wiederholt wird, sobald die Intensität der Messwertschwankungen einen vorgegebenen Schwellenwert übersteigt.

## Claims

1. Procedure for optimizing the working parameters of a hydraulic turbine comprising a distributor with adjustable guide blades and a runner which has adjustable turbine blades and is connected to an electric generator, where at a given position of the turbine blades of the runner the position of the guide blades of the distributor is varied, characterised in that the intensity of fluctuations in time of a measured value detected during the working of the hydraulic turbine is determined within a predetermined frequency band in dependence on the position of the guide blades, and the guide blades are set to a position at which the intensity fluctuations of the measured value are minimal.

2. Procedure according to claim 1, characterised in that the generator output is used as the measured value.

3. Procedure according to claim 1, characterised in that bearing vibrations are used as the measured value.

4. Procedure according to any one of claims 1 to 3, characterised in that bottom value of the frequency band is limited by a high-pass filter.

5. Procedure according to any one of claims 1 to 4, characterised in that the intensity of the fluctuation of the measured value is determined by formation of the root-mean-square value.

6. Procedure according to any one of claims 1 to 5, characterised in that the optimizing is repeated at predetermined time intervals.

7. Procedure according to any one of claims 1 to 6, characterised in that the optimizing is repeated at a predetermined change of the measured value.

8. Procedure according to any one of claims 1 to 6, characterised in that the optimizing is repeated at a predetermined change of the working conditions.

9. Procedure according to any one of claims 1 to 6, characterised in that the optimizing is repeated as soon as the intensity of fluctuations of the measured value exceeds a predetermined critical value.

## Revendications

1. Procédé d'optimisation des paramètres de fonctionnement d'une turbine à eau comprenant un distributeur à aubes directrices réglables, ainsi qu'une roue mobile à aubes mobiles réglables qui est couplée à une génératrice électrique, la position des aubes directrices du distributeur subissant une modification pour une position donnée des aubes mobiles de la roue mobile, caractérisé en ce que l'intensité des fluctuations dans le temps d'une mesure effectuée pendant que la turbine à eau est en service est déterminée dans une plage prescrite de fréquences en fonction de la position des aubes directrices et les aubes directrices sont réglées à la position à laquelle les fluctuations d'intensité de la mesure atteignent un minimum.

2. Procédé selon la revendication 1, caractérisé en ce que la valeur mesurée utilisée est la puissance de la génératrice.

3. Procédé selon la revendication 1, caractérisé en ce que la valeur mesurée utilisée est les vibrations dans le palier de la turbine à eau.

4. Procédé selon l'une des revendications 1 à 3, caractérisé en ce que la plage de fréquences est limitée vers le bas par un filtre passe-haut.

5. Procédé selon l'une des revendications 1 à 4, caractérisé en ce que l'intensité des fluctuations de la valeur mesurée est déterminée par formation d'une valeur effective.

6. Procédé selon l'une des revendications 1 à 5, caractérisé en ce que l'optimisation est répétée à intervalles prescrits de temps.

7. Procédé selon l'une des revendications 1 à 6, caractérisé en ce que l'optimisation est répétée lors d'une variation prescrite de la valeur mesurée.

8. Procédé selon l'une des revendications 1 à 6, caractérisé en ce que l'optimisation est répétée lors d'une variation prescrite des conditions de fonctionnement.

9. Procédé selon l'une des revendications 1 à 6, caractérisé en ce que l'optimisation est répétée dès que l'intensité des fluctuations de la valeur mesurée dépasse un seuil prescrit.
